# EUROPEAN PATENT APPLICATION

(11) **EP 4 329 044 A1**
(43) Date of publication of application: **28.02.2024**
(21) Application number: 22791646.7
(22) Date of filing: 12.04.2022
(51) Int. Cl.: H01M 10/0587, H01M 4/485, H01M 50/538

(54) **LITHIUM SECONDARY BATTERY**

(30) Priority: 20.04.2021 JP 2021071394
(71) Applicant: Panasonic Intellectual Property Management Co., Ltd., Kadoma-shi, Osaka 571-0057 (JP)
(72) Inventor: FUKUOKA, Takahiro, Kadoma-shi, Osaka 571-0057 (JP); KANO, Akira, Kadoma-shi, Osaka 571-0057 (JP); GESHI, Shinya, Kadoma-shi, Osaka 571-0057 (JP)
(74) Representative: Novagraaf International SA
(86) International application number: PCT/JP2022/017577
(87) International publication number: WO 2022/224872

(57) **Abstract**

A lithium secondary battery including a positive electrode including a positive electrode current collector of an elongated sheet, and a positive electrode active material layer, a negative electrode including a negative electrode current collector of an elongated sheet, a separator, a nonaqueous electrolyte, a negative electrode external terminal electrically connected to the negative electrode current collector, and a negative electrode connection portion interposed between the negative electrode current collector and the negative electrode external terminal, wherein in the negative electrode, a lithium metal deposits during charging and the lithium metal dissolves during discharging, the positive electrode, the negative electrode, and the separator form an electrode group of a cylindrical wound body, and the negative electrode connection portion includes (i) an end portion along a longitudinal direction of the negative electrode current collector projecting from one end face of the wound body, or (ii) a plurality of negative electrode tab-leads electrically connected to the negative electrode current collector and extending from the one end face of the wound body.

## Description

### [Technical Field]

The present invention relates to lithium secondary batteries.

### [Background Art]

Lithium secondary batteries (lithium metal secondary batteries) are promising as a high-capacity nonaqueous electrolyte secondary battery exceeding lithium ion batteries. In lithium secondary batteries, lithium metal deposits on the negative electrode during charging, and the lithium metal dissolves during discharging, and is released as lithium ions in the nonaqueous electrolyte.

For example, Patent Literature 1 proposes a lithium secondary battery including a positive electrode including a lithium-containing positive electrode active material, a negative electrode including a negative electrode current collector having a surface to which lithium metal deposits in a charged state, a separator disposed between the positive electrode and the negative electrode, and a nonaqueous electrolyte filling between the positive electrode and the negative electrode and having a lithium ion conductivity, wherein the negative electrode current collector includes a plurality of projections projecting from the surface to the separator, and of the surface of the negative electrode current collector, no projection is present on a predetermined line from a first end portion to a second end portion opposing the first end portion passing through a region between the plurality of projections.

Meanwhile, Patent Literature 2 proposes using a wound body unit having a positive electrode current collecting member and a negative electrode current collecting member, each of which are a ring shape or a disc shape in a lithium ion capacitor. The current collecting members are laser welded to an exposed portion of the positive electrode current collector and the negative electrode current collector. Such a structure has a low current collecting resistance, and is advantageous for achieving a high output in an electrochemical device.

### [Citation List]

### [Patent Literature]

[PLT 1]
   Japanese Unexamined Patent Publication No. 2018-195572
[PLT 2]
   WO 2012/036249

### [Summary of Invention]

### [Technical Problem]

In lithium secondary batteries, lithium metal deposits on the negative electrode during charging, and the lithium metal dissolves during discharging, and therefore the negative electrode goes through significant volume changes. Therefore, when the positive electrode, the negative electrode, and the separator are formed into an electrode group of a cylindrical wound body, the internal stress of the electrode group caused by the volume changes in the negative electrode increases.

When the size of the lithium secondary battery increases, the number of winding of the wound body increases, and therefore the internal stress of the electrode group significantly increases. The significantly increased stress causes problems such as local drying up (nonaqueous electrolyte deficiency), electrode buckling, and fractures.

### [Solution to Problem]

An aspect of the present invention relates to a lithium secondary battery including a positive electrode including a positive electrode current collector of an elongated sheet and a positive electrode active material layer supported on the positive electrode current collector; a negative electrode including a negative electrode current collector of an elongated sheet; a separator interposed between the positive electrode and the negative electrode; a nonaqueous electrolyte having a lithium ion conductivity; a negative electrode external terminal electrically connected to the negative electrode current collector; and a negative electrode connection portion interposed between the negative electrode current collector and the negative electrode external terminal, wherein in the negative electrode, a lithium metal deposits during charging, and the lithium metal dissolves during discharging, the positive electrode, the negative electrode, and the separator form an electrode group of a cylindrical wound body, and the negative electrode connection portion includes (i) an end portion along a longitudinal direction of the negative electrode current collector projecting from one end face of the wound body, or (ii) a plurality of negative electrode tab-leads electrically connected to the negative electrode current collector and extend from the one end face of the wound body.

### [Advantageous Effects of Invention]

With the present invention, even when the size of the lithium secondary battery increases, and the electrode is fractured, a sudden drop of the capacity does not occur.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a vertical cross sectional view illustrating a configuration of a battery in an embodiment of the present invention.
[FIG. 2] FIG. 2 is an oblique view illustrating an appearance of a wound body included in a battery in an embodiment of the present invention.
[FIG. 3] FIG. 3 schematically shows some variations of electrodes.
[FIG. 4] FIG. 4 is an enlarged view of a main part of FIG. 1.
[FIG. 5] FIG. 5 is a vertical cross sectional view illustrating a configuration of a battery in another embodiment of the present invention.
[FIG. 6] FIG. 6 is an oblique view illustrating an appearance of a wound body included in a battery in another embodiment of the present invention.
[FIG. 7] FIG. 7 schematically shows variations of spacers.

### [Description of Embodiments]

In the following, examples are illustrated for embodiments of the present disclosure, but the present disclosure is not limited to the examples below. In the following description, specific numerical values and materials may be exemplified, but other numerical values and other materials may be used as long as the effect of the present disclosure is obtained. In this specification, "numeral value A to numeral value B" includes the numeral value A and numeral value B, and can be read as "the numeral value A or more and the numeral value B or less". In the description below, when a lower limit and an upper limit of numeral values relating to specific physical properties and conditions are exemplified, any of the exemplified lower limits and any of the exemplified upper limits can be paired arbitrarily unless the lower limit equals the upper limit or more. When a plurality of materials are given as examples, one of them can be selected and used singly, or two or more can be used in combination. The present disclosure includes a combination of two or more of the items described in claims arbitrarily selected from the plurality of claims in the appended Claims. That is, as long as there is no technical contradiction, two or more items described in claims arbitrarily selected from the plurality of claims in the appended Claims can be combined.

The lithium secondary battery of the present disclosure has a wound type electrode group and a nonaqueous electrolyte having a lithium ion conductivity. The battery having a wound type electrode group may be referred to as a wound type battery. The external shape of the wound type electrode group or the wound type battery is cylindrical, and maybe, for example, a cylinder; and the contour of the cross section perpendicular to the winding axis may be, for example, circular, an ellipse, or a rectangular with their corners rounded (Chamfered edge).

The electrode group has a positive electrode, a negative electrode, and a separator disposed between the positive electrode and the negative electrode. The electrode group is formed by winding the positive electrode and the negative electrode with the separator interposed therebetween around a predetermined winding core. That is, the electrode group is a cylindrical wound body formed of the positive electrode, the negative electrode, and the separator.

The positive electrode, the negative electrode, and the separator are each an elongated sheet. The positive electrode has a positive electrode current collector of an elongated sheet and a positive electrode active material layer supported on the positive electrode current collector. The negative electrode has a negative electrode current collector of an elongated sheet.

The lithium secondary battery according to the present disclosure is also referred to as a lithium metal secondary battery. In the negative electrode of this type of battery, lithium metal deposits during charging, and the lithium metal dissolves during discharging. Specifically, the negative electrode has at least a negative electrode current collector, and lithium metal deposits on the negative electrode current collector directly or indirectly.

In lithium secondary batteries, for example, 70% or more of the rated capacity is developed through deposition and dissolution of lithium metal. The electron transfer at the negative electrode during charging and discharging is mainly due to the deposition and dissolution of lithium metal at the negative electrode. Specifically, 70 to 100% (e.g., 80 to 100% or 90 to 100%) of the electron transfer (or current flow in a different point of view) at the negative electrode during charging and discharging is due to the deposition and dissolution of lithium metal. That is, the negative electrode of the present disclosure is distinct from a negative electrode in which the electron transfer at the negative electrode during charging and discharging is mainly due to storing and releasing of lithium ions into or from the negative electrode active material (e.g., graphite).

In batteries in which lithium metal deposits at the negative electrode during charging, the open circuit potential (OCV: Open Circuit Voltage) of a fully charged negative electrode is, for example, 70 mV or less relative to lithium metal (dissolution deposition potential of lithium). Fully charged means, when the rated capacity of a battery is regarded as C, that the battery is charged until, for example, its state of charge (SOC: State of Charge) becomes 0.98 × C or more. The open-circuit potential (OCV) of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

The lithium secondary battery of the present disclosure has a negative electrode external terminal electrically connected to the negative electrode current collector, and a negative electrode connection portion. The negative electrode connection portion is interposed between the negative electrode current collector and the negative electrode external terminal.

The negative electrode external terminal may be an outer can accommodating the electrode group and the nonaqueous electrolyte. The outer can is a metal-made case also called a battery can. The outer can has a tubular (e.g., cylindrical) metal-made side portion, and a bottom portion closing one end portion of the side portion, and has an opening at the other end portion of the side portion. The side portion and the bottom portion may be formed integrally. The opening is closed with a sealing body, which is a different member from the outer can. The negative electrode external terminal may be provided at a sealing body that seals the opening of the outer can. The material of the outer can is not particularly limited, and it may be a metal, and in terms of strength and durability, stainless steel is preferable.

In the first embodiment of the present disclosure, the negative electrode connection portion has (i) an end portion along a longitudinal direction of the negative electrode current collector projecting from one end face of the wound body. The negative electrode connection portion may have a negative electrode current collecting plate. The negative electrode current collecting plate is connected to the end portion along a longitudinal direction of the negative electrode current collector projecting from one end face of the wound body by welding and the like. The end portion along a longitudinal direction of the negative electrode current collector projecting from one end face of the wound body may be connected to the bottom portion of the outer can by welding and the like at the negative electrode connection portion.

In the second embodiment of the present disclosure, the negative electrode connection portion has (ii) a plurality of negative electrode tab-leads electrically connected to the negative electrode current collector. The plurality of negative electrode tab-leads are each extended from one end face of the wound body. The plurality of negative electrode tab-leads may be each connected to the bottom portion of the outer can by welding and the like. When the negative electrode external terminal is provided at the sealing body, not the outer can, the plurality of negative electrode tab-leads may be each connected to predetermined portions of the sealing body by welding and the like.

The negative electrode connection portion of the first embodiment (hereinafter, also referred to as "end face current collecting structure") is advantageous for achieving a high output in a battery. The negative electrode connection portion of the second embodiment (hereinafter, also referred to as "multi-tab structure") is a simpler structure than that of the end face current collecting structure, and in addition to achieving a high output in a battery, it is advantageous for achieving a high capacity in that there is no need for a current collecting plate. Meanwhile, in lithium secondary batteries, the end face current collecting structure or the multi-tab structure has significant effects in addition to the above-described effect of achieving a high output: even when the electrode is fractured, a sudden drop of the capacity does not occur.

Lithium secondary batteries have a high energy density, but the negative electrode goes through significant volume changes, and therefore electrode buckling and electrode fractures are easily caused. In particular, when the size of the lithium secondary battery is large, the internal stress of the electrode group caused by the negative electrode volume change is significant. When electrode fractures are caused in conventional lithium secondary batteries, a sudden drop in the capacity occurs. In contrast, in a battery having the end face current collecting structure or multi-tab structure, even when the electrode is fractured, the sudden drop in the capacity does not occur. In the case of a battery having the end face current collecting structure, even when the negative electrode is fractured, and the electric current path in the longitudinal direction of the negative electrode is shut down, it has no effect on the electric current path in the transverse direction of the negative electrode, and therefore there is no great effect on the capacity. In the case of a battery having the multi-tab structure, even when the negative electrode is fractured and the electric current path in the longitudinal direction of the negative electrode is shut down, when each of the plurality of regions formed by the fracture is connected to the negative electrode tab-lead, there is no great effect on the capacity.

Also, the larger the size of the conventional lithium secondary battery, the longer the length of the positive electrode and the negative electrode in the longitudinal direction. As a result, in addition to the increase in the internal stress of the electrode group, the electric current density becomes nonuniform significantly. The nonuniform electric current density accelerates nonuniformity of the negative electrode thickness to induce the electrode facture, and cause the dendritic lithium metal deposition. In contrast, with a battery having the end face current collecting structure or the multi-tab structure, even when the length of the positive electrode and the negative electrode in the longitudinal direction increases, because the current collecting path is ensured in the transverse direction of the electrode, the electric current density does not easily become nonuniform.

The lithium secondary battery of the present disclosure particularly has significant effects when, for example, the positive electrode is wound by a number of 29 or more, or even 70 or more. The winding number corresponds to the number of lamination of the positive electrode in the radial direction of the electrode group of the wound body. That is, the winding number corresponds to the number of the intersections formed by the straight line from the winding axis of the electrode group toward the outermost periphery of the electrode group crossing the positive electrode. The length of the positive electrode in the longitudinal direction may be, for example, 1100 mm or more, or 3600 mm or more.

Furthermore, in the lithium secondary battery of the present disclosure, the end face current collecting structure or the multi-tab structure is used in the negative electrode having a high current collecting resistance compared with the positive electrode, and therefore it is advantageous for achieving a high output. That is, when the end face current collecting structure or the multi-tab structure is used in the negative electrode, in addition to decreasing the effect of the fracture of the negative electrode susceptible to fractures compared with the positive electrode, it has a significant effect of decreasing the current collecting resistance.

When the negative electrode connection portion has the multi-tab structure having a plurality of negative electrode tab-leads, a total width ln of the plurality of negative electrode tab-leads may be 2% or more of the longitudinal direction length Ln of the negative electrode. In this case, current collecting efficiency that is comparable to the end face current collecting structure can be achieved. The total width ln may be 10% or more and 80% or less of Ln.

When the negative electrode is zoned in the longitudinal direction into three or more (preferably four or more or five or more) regions having the same length, each region preferably has at least one negative electrode tab-lead connected thereto. In this case, even when the negative electrode is fractured and the electric current path in the longitudinal direction of the negative electrode is shut down, the probability of a plurality of regions formed by the fracture each having the negative electrode tab-lead connected thereto is high. Thus, the probability of occurrence of the sudden drop in the capacity can be effectively decreased.

When the negative electrode is zoned in the longitudinal direction into three or more regions having the same length as described above, a to-be-fractured portion may be provided at an interface between the regions next to each other for allowing a fracture to occur in the negative electrode current collector in a prioritized manner. The to-be-fractured portion may be a plurality of slits extending in a broken line from one end portion to the other end portion in the transverse direction of the negative electrode current collector, or a slit extending from the one end portion to the other end portion in the transverse direction of the negative electrode current collector. The slit may be half or more of the length (i.e., width) in the transverse direction of the negative electrode current collector, or a slit with 90% or less of the length (i.e., width) in the transverse direction.

When the negative electrode external terminal is an outer can, the plurality of negative electrode tab-leads each is preferably connected to an inner face of the bottom portion of the outer can. The plurality of negative electrode tab-leads are each extended from a random position of one end face of the electrode group, and it is not easy to control the position of the extension at the end face of the plurality of negative electrode tab-leads. However, it is easy to connect the plurality of negative electrode tab-leads extending from the random position of the end face to the inner face of the bottom portion of the outer can by welding. In this case, it is efficient to bend the tip end portion of the plurality of negative electrode tab-leads toward a center side of the electrode group, and welding the tip end portion of the plurality of negative electrode tab-leads altogether to the region including the center portion of the bottom portion of the outer can, using the hollow along the winding axis of the electrode group. The center portion of the bottom portion of the outer can means a region within a circle with, for example, a radius of 3 mm or less from a center of the bottom portion of the outer can. Such a structure does not necessitate a current collecting plate as in the end face current collecting structure, and therefore it contributes to simpler production processes of batteries and a higher capacity in batteries.

The end face current collecting structure or the multi-tab structure can also be used for the positive electrode, not only the negative electrode. That is, the lithium secondary battery of the present disclosure may include a positive electrode external terminal electrically connected to the positive electrode current collector, and a positive electrode connection portion. The positive electrode connection portion is interposed between the positive electrode current collector and the positive electrode external terminal.

The outer can may also serve as the positive electrode external terminal, when the negative electrode external terminal is not the outer can. The positive electrode external terminal may be provided at a sealing body that seals the opening of the outer can.

The positive electrode connection portion may have (i) an end portion along a longitudinal direction of the positive electrode current collector projecting from the other end face of the wound body (side not provided with the negative electrode connection portion). The positive electrode connection portion may have a positive electrode current collecting plate. The positive electrode current collecting plate is connected to the end portion along a longitudinal direction of the positive electrode current collector projecting from the other end face of the wound body by welding and the like. The end portion along a longitudinal direction of the positive electrode current collector projecting from the other end face of the wound body may be connected to the bottom portion of the outer can by welding and the like at the positive electrode connection portion.

The positive electrode connection portion may have (ii) a plurality of positive electrode tab-leads electrically connected to the positive electrode current collector. The plurality of positive electrode tab-leads are each extended from the other end face of the wound body (side not provided with the negative electrode connection portion). When the negative electrode external terminal is provided at the sealing body, not the outer can, the plurality of positive electrode tab-leads may be each connected to the bottom portion of the outer can by welding or the like. When the negative electrode external terminal is the outer can, the plurality of positive electrode tab-leads may each be connected to predetermined positions of the sealing body by welding or the like.

When the positive electrode connection portion has the multi-tab structure having a plurality of positive electrode tab-leads, a total width lp of the plurality of positive electrode tab-leads may be 1% or more of the longitudinal direction length Lp of the positive electrode. In this case, current collecting efficiency that is comparable to the end face current collecting structure can be achieved. The total width lp may be 5% or more and 70% or less of Lp.

When the negative electrode connection portion has the multi-tab structure having a plurality of negative electrode tab-leads, and the positive electrode connection portion has the multi-tab structure having a plurality of positive electrode tab-leads, the total width ln of the plurality of negative electrode tab-leads is preferably larger than the total width lp of the plurality of positive electrode tab-leads. The negative electrode has a higher current collecting resistance compared with the positive electrode, and therefore by satisfying ln > lp, the balance of current collecting status in the battery improves, and nonuniform electric current density can be suppressed even more effectively. The ratio of ln to lp: ln/lp is preferably 1.1 or more, or may be 1.1 or more and 3.0 or less.

The electrode group preferably has a space (hereinafter, also referred to as "inter-electrode plate space") that allows the separator to be apart from and oppose at least one of the positive electrode and the negative electrode. In this manner, drying up is significantly suppressed, and unevenness of reactions (reaction nonuniformity) in the electrode group are suppressed. Significant suppression of the drying up is because the inter-electrode plate space works to absorb the volume increase when the negative electrode expands.

The inter-electrode plate space may be present at least in a discharged state. The discharged state means a state after a large amount of lithium metal is dissolved from the negative electrode, and for example, may be a state with a SOC of 0.05 × C or less. However, the inter-electrode plate space does not have to be filled completely with lithium metal in a charged state, and therefore the inter-electrode plate space may be present when, for example, in a fully charged state.

The separator is apart from at least one of the positive electrode and the negative electrode by a separation distance of, for example, 15 µm or more and 65 µm or less. The separation distance is a distance in a direction (when the electrode group is cylindrical, radial direction) perpendicular to the winding axis between the electrode surface and the separator surface that define the inter-electrode plate space. When the distance is 15 µm or more, a sufficient space can be ensured for accommodating the lithium metal that deposits at the negative electrode during charging, and the stress at the time of negative electrode expansion can be sufficiently suppressed. When the distance is 65 µm or less, or even 60 µm or less, an excessive space is not formed in the electrode group, and electrode buckling is hardly caused.

The inter-electrode plate space may be provided by a spacer interposed between the separator and at least one of the positive electrode and the negative electrode. The spacer is provided on at least one selected from the group consisting of the positive electrode surface, the negative electrode surface, and the separator surface. By providing the spacer on the positive electrode surface or the separator surface at the positive electrode side, a surface pressure can be easily applied to the negative electrode from the separator, and dendritic lithium metal does not easily deposit, thus advantageous for improvement in the capacity retention rate in charge and discharge cycles.

The spacer material has an insulating property, and may be nonporous or porous. The spacer may be formed of, for example, a composite including a resin material and particles. The resin material works to bind at least particles together. Such a spacer may be formed using a dispersion liquid including a resin material and particles.

The spacer height may be designed in accordance with a desired separation distance. The spacer height may be 15 µm or more, 20 µm or more, 25 µm or more, or 30 µm or more. The spacer height may be 65 µm or less, or 60 µm or less. The spacer height is a maximum dimension of the spacer in the thickness direction (hereinafter, also referred to as a direction T) of the separator. The spacer height is determined by capturing images of cross sections of the spacer in the direction T using a scanning electron microscope (SEM), and measuring the heights at random 10 points, and averaging them.

When the spacer is present, the negative electrode is zoned into a first region opposing the spacer, and a second region not opposing the spacer. The inter-electrode plate space is formed in correspondence with the second region. The ratio of the area of the first region relative to a total area of the first region and the second region is not particularly limited, but may be, in view of balance between cycle characteristics and the internal resistance, for example 5% or more and 30% or less, or 5% or more and 20% or less. The larger the ratio of the area of the first region, the more the amount of lithium metal deposition per unit area in the second region. Thus, the negative electrode thickness changes to a larger extent.

The first region opposing the spacer is preferably disposed at the negative electrode in a uniform and dispersed state as much as possible. In this manner, while suppressing an increase in the internal resistance, points where lithium metal locally deposits in a large amount can be decreased, and deformation of the electrode group can be easily suppressed. Generally, the positive electrode and the negative electrode have an elongated (strip) shape having a long side and a short side. Setting the length (width) of the strip negative electrode in the short side direction as L, and setting an arbitrary circle region having a diameter of L/3 on a surface of the negative electrode, preferably, the first region and the second region coexist in such a circle region all the time.

When the positive electrode connection portion has an end face current collecting structure having a positive electrode current collecting plate, a portion of the spacer may be disposed in a region on the positive electrode current collector between the positive electrode current collecting plate and the positive electrode active material layer. With this structure, the exposed portion of the positive electrode current collector is protected by the spacer of an insulating member. By protecting the exposed portion of the positive electrode current collector with the insulating member, the battery safety can be effectively improved.

In the following, embodiments of a battery of the present disclosure is further described with reference to the drawings. In each of the figures, the shape and characteristics of each of the constituent elements do not necessarily reflect the actual size, and do not necessarily represent the same proportional ratio. The same constituent elements in each of the figures are denoted with the same reference numerals.

### [Lithium secondary battery]

### (First embodiment)

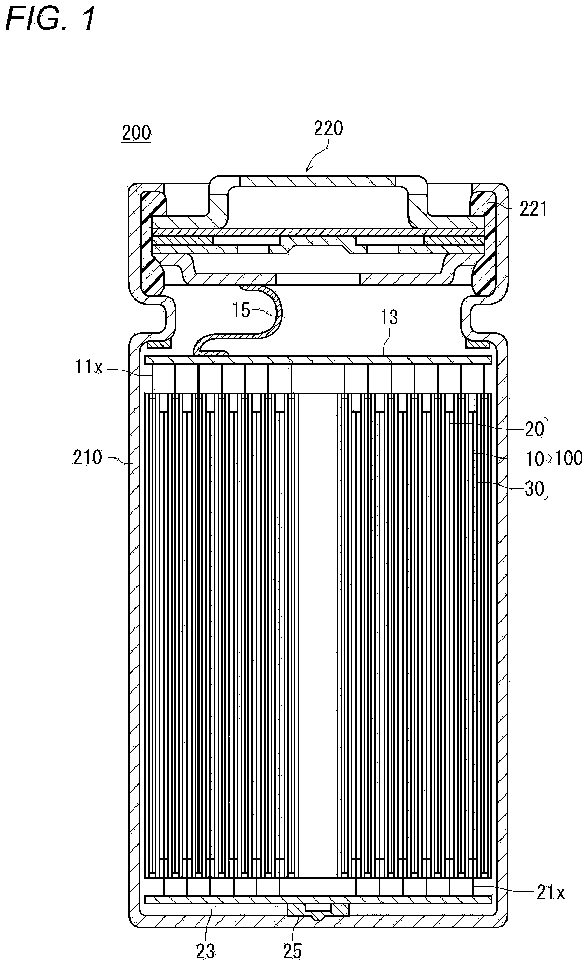

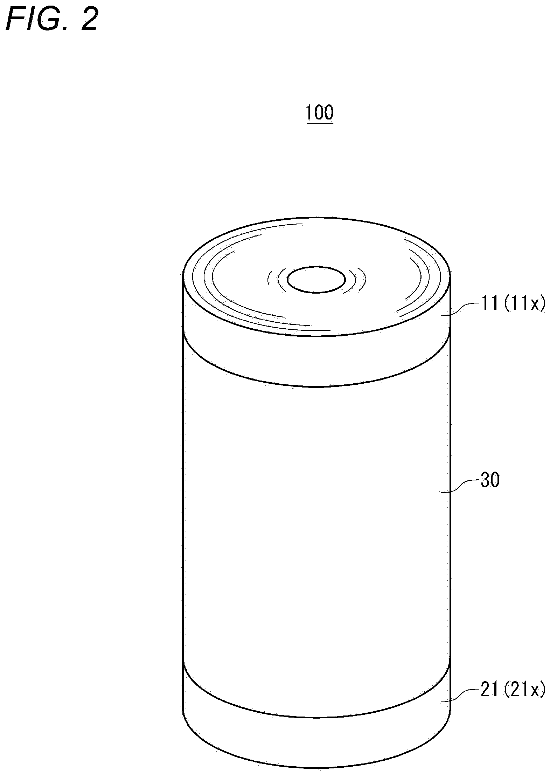

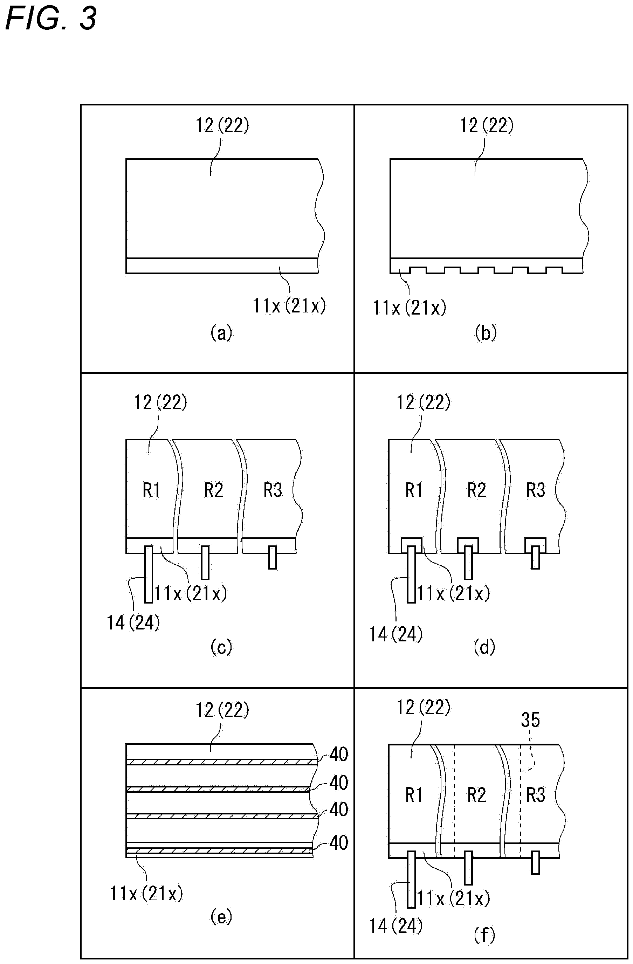

FIG. 1 is a vertical cross sectional view illustrating a configuration of a lithium secondary battery 200 of a first embodiment of the present invention. FIG. 2 is an oblique view illustrating an appearance of a wound body 100 included in the lithium secondary battery 200. FIG. 3 is a schematic view illustrating some variations of electrodes. The positive electrode 10 and the negative electrode 20 forming the wound body 100 are each a type of electrode shown in FIG. 3 (a).

The battery 200 has a wound body 100 formed with a positive electrode 10 and a negative electrode 20 wound into a cylindrical shape with a separator 30 interposed therebetween, a nonaqueous electrolyte (not shown), a metal-made bottomed battery case 210 accommodating the wound body 100 and the nonaqueous electrolyte, and a sealing plate 220 that seals the opening of a battery case 210. A gasket 221 is disposed at a peripheral portion of the sealing plate 220, and by crimping the open end portion of the battery case 210 to the gasket 221, the inside the battery case 210 is sealed.

The positive electrode 10 is an elongated sheet, and has a positive electrode current collector 11 and a positive electrode active material layer 12 supported thereon. The positive electrode active material layer 12 is formed on both surfaces of the positive electrode current collector 11. However, a positive electrode current collector exposed portion 11x not having the positive electrode active material layer 12 is formed at one end portion along the longitudinal direction of the positive electrode current collector 11.

The negative electrode 20 is an elongated sheet, and has a negative electrode current collector 21. The negative electrode 20 may include a lithium ion storage layer 22 (i.e., a layer that develops capacity by storing and releasing lithium ions into and from a negative electrode active material (e.g., graphite)) which is supported on the negative electrode current collector 21. In this case, the open circuit potential of the negative electrode at full charge may be 70 mV or less versus lithium metal (lithium dissolution-deposition potential). When the open circuit potential of the negative electrode at full charge is 70 mV or less versus lithium metal, the lithium ion storage layer at full charge has lithium metal on its surface. That is, the negative electrode develops a capacity through deposition and dissolution of lithium metal.

The wound body 100 of FIG. 1 is formed into a cylindrical shape by winding the positive electrode 10 and the negative electrode 20 with the separator 30 interposed therebetween. Upon winding, an alignment is made so that the positive electrode current collector exposed portion 11x projects from one end face of the wound body 100, and an negative electrode current collector exposed portion 21x projects from the other end face of the wound body 100. The separator 30 is wound around the outermost periphery of the wound body 100.

The positive electrode current collector exposed portion 11x projecting from one end face of the wound body 100 is connected to the positive electrode current collecting plate 13 by welding and the like. The negative electrode current collector exposed portion 21x projecting from the other end face of the wound body 100 is connected to the negative electrode current collecting plate 23 by welding and the like. That is, the positive electrode connection portion and the negative electrode connection portion both have the end face current collecting structure.

The material of the positive electrode current collecting plate 13 is, for example, aluminum, an aluminum alloy, titanium, and stainless steel. The material of the positive electrode current collecting plate may be the same as that of the positive electrode current collector 11. The material of the negative electrode current collecting plate 23 is, for example, copper, a copper alloy, nickel, and stainless steel. The material of the negative electrode current collecting plate 23 may be the same as that of the negative electrode current collector 21.

One end of the positive electrode tab 15 whose the other end is connected to the positive electrode current collecting plate 13 is connected to the inner face of a sealing plate 220. Thus, the sealing plate 220 functions as an external positive electrode terminal. By connecting the positive electrode current collecting plate 13 to the end portion along the longitudinal direction of the positive electrode current collector projecting from one end face of the wound body 100, the positive electrode connection portion is formed.

The negative electrode current collecting plate 23 is welded to a welding member 25 provided at an inner bottom face of the battery case 210. Thus, the battery case 210 functions as an external negative electrode terminal. By connecting the negative electrode current collecting plate 23 to the end portion along the longitudinal direction of the negative electrode current collector projecting from the other end face of the wound body 100, the negative electrode connection portion is formed.

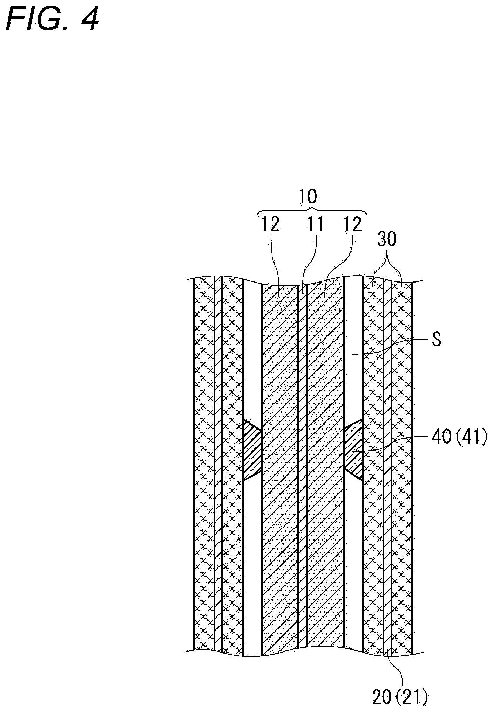

FIG. 4 is an enlarged view schematically illustrating the main part in FIG. 1 in a discharged state. A spacer 40 is provided between the positive electrode 10 and the separator 30. The spacer 40 secures an inter-electrode plate space S. The spacer 40 is composed of a lined projection 41 provided along the long side direction of the separator 30. In a discharged state, lithium metal is not deposited on the surface of the negative electrode current collector 21, and a space is kept between the positive electrode 10 and the separator 30. Meanwhile, in a charged state, lithium metal deposits on the surface of the negative electrode current collector 21, and is accommodated in the space between the negative electrode 20 and the separator 30 while receiving a pressure from the separator 30. The negative electrode 20 includes, in a discharged state, the negative electrode current collector 21, and in a charged state, includes the negative electrode current collector 21 and lithium metal deposited on its surface. However, this configuration is an example, and the negative electrode 20 may include lithium metal on its surface even in a discharged state, in addition to the negative electrode current collector 21.

The lithium metal is accommodated in the inter-electrode plate space between the positive electrode 10 and the separator 30, and therefore the apparent volume change of the electrode group involved with the lithium metal deposition during charge and discharge cycles can be reduced. Thus, the stress applied to the negative electrode current collector 21 is also suppressed. Also, the pressure is applied from the separator 30 to the lithium metal accommodated between the negative electrode 20 and the separator 30, and therefore deposition status of the lithium metal is controlled, the lithium metal does not easily isolate, and reduction in the charge and discharge efficiency is suppressed.

In the example shown, the spacer 40 has a trapezoidal cross sectional shape. However, the embodiment of the present disclosure is not limited thereto, and for example, it can be a rectangle, a rectangle with a curved line at at least one corner, an ellipse, and a portion of an ellipse. Also, in the example shown, the spacer 40 is provided between the positive electrode 10 and the separator 30, but the embodiment of the present disclosure is not limited thereto. The spacer 40 may be provided only between the negative electrode 20 and the separator 30, or provided both between the positive electrode 10 and the separator 30, and between the negative electrode 20 and the separator 30. The spacer 40 is provided at at least one selected from the group consisting of the positive electrode surface, the negative electrode surface, and the separator surface. By providing the spacer on the positive electrode surface or the separator surface at the positive electrode side, a surface pressure can be easily applied to the negative electrode from the separator, and dendritic lithium metal does not easily deposit, thus advantageous for improvement in the capacity retention rate in charge and discharge cycles.

In the example shown, each of the positive electrode 10 and the negative electrode 20 is a type of electrode shown in FIG. 3 (a), but not limited thereto. For example, as shown in FIG. 3(b), the current collector exposed portion 11x (21x) may be processed to give projections and depressions. Also, as shown in FIG. 3 (e), the spacer 40 may be formed on the positive electrode 10 surface or the negative electrode 20 surface. In FIG. 3 (e), one of the spacers 40 is formed on the current collector exposed portion 11x (21x). With this structure, the exposed portion of the positive electrode current collector can be protected by the spacer 40 of an insulating member.

### (Second embodiment)

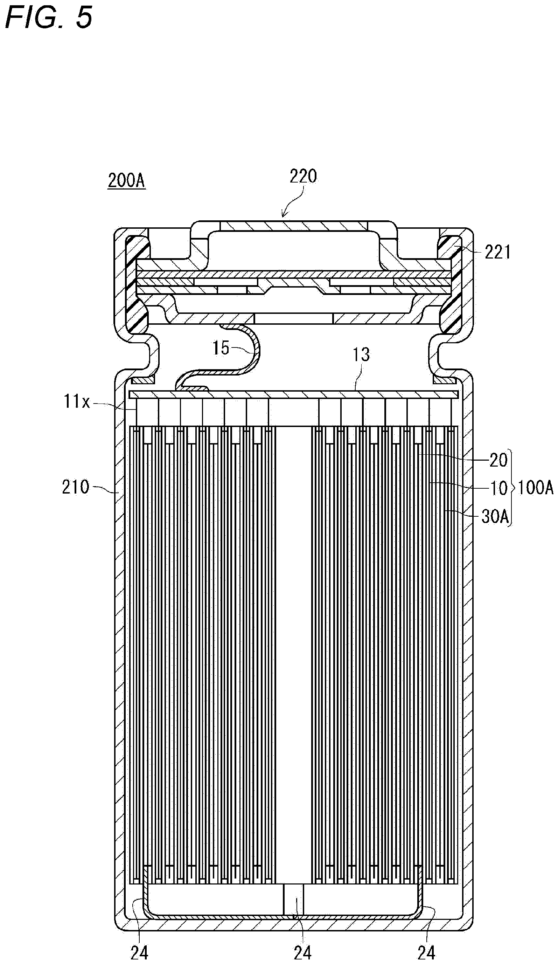

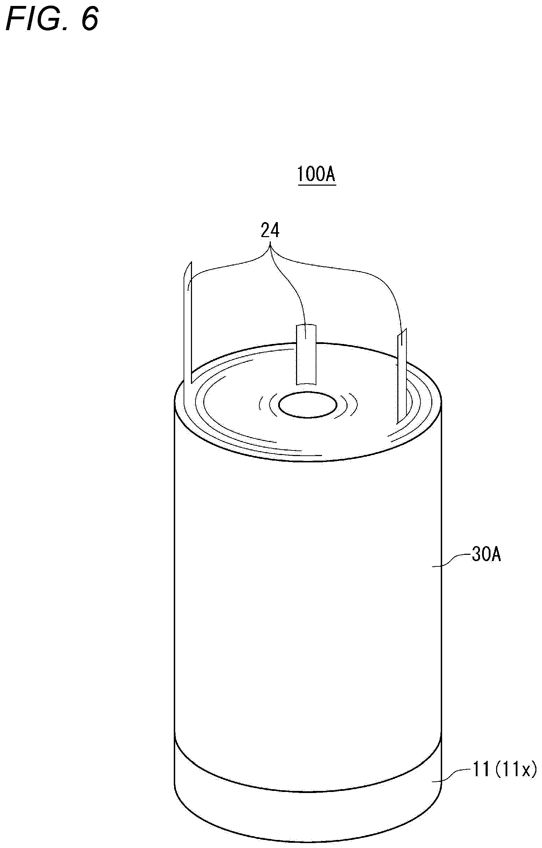

FIG. 5 is a vertical cross sectional view illustrating a configuration of a lithium secondary battery 200A in a second embodiment of the present invention. FIG. 6 is an oblique view illustrating an appearance of a wound body 100A included in the lithium secondary battery 200A. The positive electrode 10 forming the wound body 100 is a type of electrode shown in FIG. 3 (a), and the negative electrode 20 is a type of electrode shown in FIG. 3 (c), (d), or (f). In this embodiment, the positive electrode connection portion has the end face current collecting structure, and the negative electrode connection portion has the multi-tab structure.

The type of negative electrode 20 of FIG. 3 (c), (d), or (f) has at least a negative electrode current collector 21 of an elongated sheet, and has a lithium ion storage layer 22 supported on the negative electrode current collector 21, or a sheet of lithium metal or lithium alloy layer 22 in close contact with the surface of the negative electrode current collector 21. However, regardless of the examples shown, the negative electrode 20 may be formed only of the negative electrode current collector 21. A negative electrode current collector exposed portion 21x having none of these layers is formed at one end portion along the longitudinal direction of the negative electrode current collector 21. To the negative electrode current collector exposed portion 21x, a plurality of tab-leads 24 are connected. The plurality of tab-leads 24 are each extended from one end face of the wound body 100A.

Of the plurality of tab-leads 24, the tab-lead 24 connected to the outer peripheral side of the wound body 100A is longer than the tab-lead 24 connected to the inner peripheral side, and the projection distance from the end face of the wound body 100A is larger. The projection length of the tab-lead 24 from the end face of the wound body 100A may be, for example, a length for the tab-lead 24 to reach near the center of the wound body 100 A when the tab-lead 24 is bent toward the center of the wound body 100A. The tab-lead 24 extending from an arbitrary position of the end face of the wound body 100A may be welded to an inner face of the bottom portion of the battery case 210 using a hollow at the center portion of the wound body 100A. For example, an electrode for welding may be inserted to the hollow of the wound body 100A to perform necessary welding.

As described above, when the negative electrode connection portion has the multi-tab structure, the negative electrode current collecting plate is not necessary, and therefore it is preferable in that the effect of an increase in capacity and the effect of improvement in current collecting efficiency of the negative electrode with a large current collecting resistance can be achieved both at the same time. Furthermore, the negative electrode external terminal is the outer can, and the process of connecting the plurality of tab-leads 24 to the inner face of the bottom portion of the outer can is a conventional process, and therefore alignment of the plurality of tab-lead 24 does not have to be performed strictly.

Not only the negative electrode 20, the positive electrode 10 may be a type of electrode shown in FIG. 3 (c), (d), or (f), with a positive electrode connection portion of a multi-tab structure having a plurality of tab-leads 14. Also, only the positive electrode connection portion may be the multi-tab structure, with the negative electrode connection portion of the end face current collecting structure.

The type of electrode shown in FIG. 3 (c) is suitable for any of the positive electrode and the negative electrode. When the electrode is zoned into three regions of R1, R2, and R3 having the same length in the longitudinal direction, one tab-lead is connected to each region. The type of electrode shown in FIG. 3 (d) is particularly suitable for the positive electrode. The type of electrode shown in FIG. 3 (f) has a to-be-fractured portion 35 for allowing a fracture to occur in the current collector in a prioritized manner, and is suitable for any of the positive electrode and the negative electrode. The to-be-fractured portion 35 shown in the example is a plurality of slits extending as a broken line in the transverse direction of the current collector from one end portion to the other end portion, but not limited thereto. By making the design so that the tab-lead 14 (24) is connected to each of the regions R1 to R3 formed by fracture at the to-be-fractured portion 35, even if the electrode is fractured, the sudden drop in the capacity does not occur.

In the example shown, description is given for a cylindrical lithium secondary battery, but the shape of the lithium secondary battery is not limited thereto: the shape may be rectangular, and can be suitably selected from various shapes according to application. A known configuration other than the above can be used without particular limitation.

For example, the battery case is not limited to the case in which the outer can is used. For example, the battery case may be a film case. The film case is, for example, a case made of a laminate (laminate film) composed of a barrier layer such as a metal foil and a resin layer formed into a bag. The barrier layer works to shield from external air or moisture content more than resin, and is formed of a metal foil, a metal oxide layer, etc.

In the following, main components of the lithium secondary battery are described in detail.

### [Spacer]

The spacer 40 provided between the separator 30 and the positive electrode 10 and/or the negative electrode 20 forms an inter-electrode plate space S that accommodates deposited lithium metal. The separator 30 is generally an elongated sheet (strip) having a long side and a short side. The direction along the short side of the separator 30 is named D1. In a cross section parallel to the direction T of the spacer and parallel to the direction D 1 (hereinafter, referred to as base cross section), the contact length between any of the separator 30, the positive electrode 10 or the negative electrode 20, and the spacer 40 (width of a first region) is not particularly limited, and for example, it is 500 µm or more and 2000 µm or less. When the contact length is in this range, the stress applied to the spacer 40 is easily distributed evenly to the separator 30, the positive electrode 10, and the negative electrode 20. The first region opposing the spacer 40 is easily disposed to oppose the positive electrode 10 or the negative electrode 20 evenly and in a dispersed state. The contact length is an average value of the contact lengths at five different portions in the base cross section.

The shape of the spacer 40 at the base cross section is not particularly limited. The shape of the spacer at the base cross section is, for example, rectangular, a rectangular with a curved line at at least one corner, a trapezoid, an ellipse, a portion of an ellipse, or those similar to these shapes.

The material forming the spacer 40 is not particularly limited. The spacer 40 may be formed, for example, by applying a solution or a dispersion liquid including a resin material and the like on a surface of the separator 30, the positive electrode 10, or the negative electrode 20 and then drying. The solvent or the dispersion medium is not particularly limited, and for example, N-methyl-2-pyrrolidone (NMP) can be used. The spacer 40 can also be formed by spraying particles on a surface of the separator 30, the positive electrode 10, or the negative electrode 20 in a desired shape. The spacer 40 may be formed by applying a curable resin on a surface of the separator 30, the positive electrode 10, or the negative electrode 20 in a desired shape, and then curing. The spacer 40 may be formed by attaching an adhesive tape on a surface of the separator 30, the positive electrode 10 or the negative electrode 20. Preferably, of the above-described methods, the method using a solution or a dispersion liquid including a resin material is preferable. In particular, the method using a dispersion liquid including a resin material and particles is preferable. In this case, the spacer is formed of a composite including a resin material and particles.

Examples of the resin material include fluorine-containing resins such as polyvinylidene fluoride (PVdF) and polytetrafluoroethylene; rubbers such as fluorine-containing rubbers including a vinylidene fluoride-tetrafluoroethylene copolymer and an ethylene-tetrafluoroethylene copolymer, a styrene-butadiene copolymer or a hydride thereof, an acrylonitrile-butadiene copolymer or a hydride thereof, a methacrylic acid ester-acrylic acid ester copolymer, a styrene-acrylic acid ester copolymer, an acrylonitrile-acrylic acid ester copolymer, an ethylene propylene rubber, polyvinyl alcohol, and polyvinyl acetate; cellulose derivatives such as ethylcellulose, methylcellulose, hydroxyethylcellulose, and carboxymethylcellulose; acrylic resins such as an acrylic acid-methacrylic acid copolymer; polyphenylene ether, polysulfone, polyether sulfone, polyphenylene sulfide, polyether imide, and polyimide; polyamides such as fully aromatic polyamide (aramid); polyimides; polyamide imides; polyacrylonitrile; polyvinyl alcohol; polyethers; polyacrylic acid; polymethacrylic acid; polyesters; polyolefins; silicone resins, urethane resins, melamine resins; urea resins; and epoxy resins.

The particles may be inorganic particles or organic particles. In particular, inorganic particles such as insulative metal oxides, metal hydroxides, metal nitrides, metal carbides, and metal sulfides may be used. For the metal oxides, aluminum oxide (alumina or boehmite), magnesium oxide, titanium oxide (titania), zirconium oxide, and silicon oxide (silica) are preferable materials. For the metal hydroxide, aluminum hydroxide and the like may be used. For the metal nitrides, silicon nitride, aluminum nitride, boron nitride, titanium nitride, and the like may be used. For the metal carbide, silicon carbide, boron carbide, and the like may be used. For the metal sulfide, barium sulfate and the like may be used. Furthermore, minerals such as aluminosilicate, layered silicate, barium titanate, and strontium titanate may be used. In particular, alumina, silica, and titania are preferably used.

The average particle size of the particles is not particularly limited, and for example, 10 µm or less is preferable, and 0.1 µm or more and 2.0 µm or less is more preferable. The average particle size can be determined by photographing cross sections of the spacer in the direction T in the secondary battery with an electron microscope, processing the image such as binarization of the photographed image to specify a particle portion, and averaging the diameter of the corresponding circle having the same area as the particles. The average is preferably determined from, for example, 100 or more particles.

In a composite including the resin material and the particles, the particles are preferably included by, per 100 parts by mass of the resin material, 70 parts by mass or more and 100 parts by mass or less. In this manner, the spacer can easily have sufficient strength.

The spacer disposition is not particularly limited. Preferably, for example, the spacer is disposed so that a straight line SL passing through 3 or more (preferably 4 or more, more preferably 5 or more) points of the spacers can be drawn along the direction D1, when seen from the direction T (normal direction to separator main surface). In this case, uneven or dendritic lithium metal deposition at the negative electrode does not easily occur. Furthermore, local expansion in the negative electrode is suppressed, and therefore damages to the electrode does not easily occur. In addition, supporting points by which the spacer supports the separator and the electrode increases, so that the separator and the electrode receive stress from the spacer relatively evenly. Thus, damages to the electrode are further suppressed. Furthermore, the separator can give more uniform pressure to the entire lithium metal to be deposited. Thus, the deposition direction of the lithium metal is easily controlled more to the surface direction of the negative electrode.

When seen from the direction T, in the straight line SL, the ratio of the minimum distance d (µm) between adjacent spacers to the spacer height h (µm):d/h may be, for example, 10 or more and 800 or less, or 40 or more and 400 or less. By controlling the d/h ratio to the above-described range, a sufficient space necessary for accommodating the lithium metal can be easily ensured. Furthermore, the separator can give more uniform pressure to the entire lithium metal to be deposited. The minimum distance d between adjacent spacers can be determined by measuring one minimum distance d for random 10 straight lines SL, and calculating the average value.

The spacer may be, for example, a plurality of lined projections disposed on a surface of the electrode or the separator in stripes so as to cross the direction D1. For example, on both ends of the separator surface in the direction D1, projections along the long side direction (hereinafter, direction D2) of the separator is provided, one at each end, and one or more projections along the direction D2 can be provided between the both ends. In this case, the straight lines SL can be drawn so as to pass the spacer with a total of 3 or more points, i.e., two at both ends, and one or more between the both ends. The spacer composed of such a plurality of lined projections can be formed relatively easily on a surface of the separator or the electrode. The parameters such as the height h, the ratio d/h, and the like can be easily controlled as well.

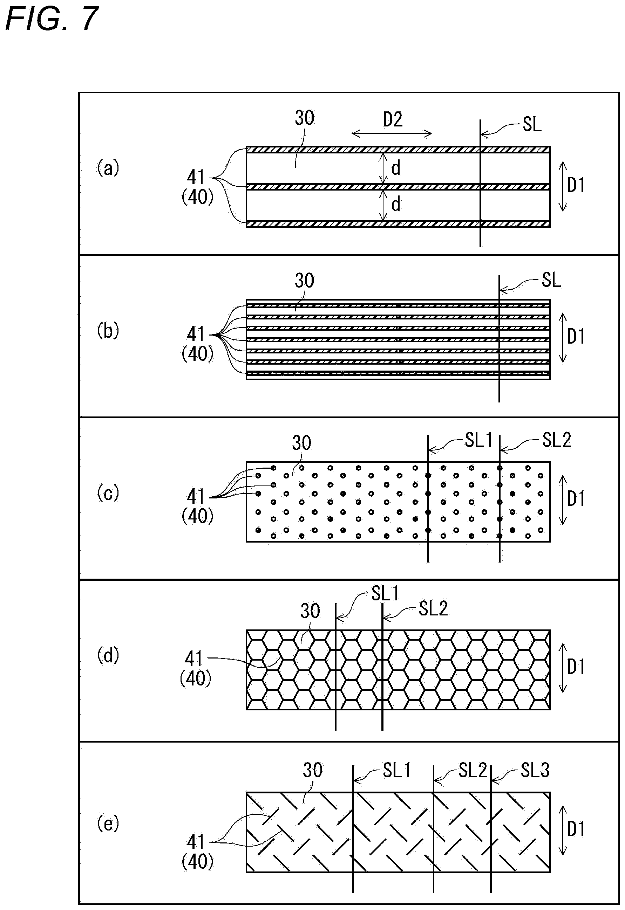

Next, description is given below of an arrangement of the spacer with reference to FIG. 7. In the examples shown, the spacer is provided at a surface of the separator. However, the embodiment of the present disclosure is not limited thereto, and the spacer may be provided on a surface of the electrode.

FIG. 7(a) is a plan view schematically illustrating a spacer disposed on a surface of the separator. The spacer 40 has lined projections 41 provided along a direction D2 on a surface of the separator 30 at both ends in a direction D1 and a lined projection 41 provided along the direction D2 at a center between the both ends. That is, the spacer 40 is composed of the lined projections 41 of a total of three that are substantially parallel to each other. Thus, the straight line SL drawn along the direction D1 passes through the spacer 40 at three points. Substantially parallel means it is generally parallel, and the lined projections 41 may cross each other at an angle of, for example, 0° to 20°, or 0° to 10°.

FIG. 7(b) is a plan view schematically illustrating another spacer disposed on a surface of the separator. The spacer 40 is composed of a plurality of lined projections 41 disposed in stripes on a surface of the separator 30 along the direction D2. In this case, the straight line SL can be drawn along the direction D1 so as to pass through the lined projections 41 by the number of the lined projections 41 (in the example shown, 7 points).

FIG. 7(c) is a plan view schematically illustrating still another spacer disposed on a surface of the separator. The spacer 40 is composed of a plurality of spotted projections 41 disposed to be distributed evenly on a surface of the separator 30. In the example shown, when drawing the straight line SL along the direction D1, depending on the position of the straight line SL, the number of the spotted projections 41 to be passed through changes. The straight line SL1 passes four projections 41, and the straight line SL2 passes five projections 41. In such a case, of the plurality of straight lines SL that can be drawn in different manners, it suffices at least one straight line SL passes through the projections of three or more.

FIG. 7(d) is a plan view schematically illustrating still another spacer disposed on a surface of the separator. The spacer 40 is a honeycomb shaped continuous rib disposed to be distributed evenly on a surface of the separator 30. In this case as well, when a straight line SL is drawn along the direction D1, the number of the ribs to be passed differs depending on the position of the straight line SL. The straight line SL1 passes through the rib at five points, and the straight line SL2 passes through the rib at four points.

FIG. 7(e) is a plan view schematically illustrating still another spacer disposed on a surface of the separator. The spacer 40 is composed of a plurality of linear projections 41 disposed to be distributed evenly on a surface of the separator 30. The linear projection 41 is disposed alternately along the direction D1 so as to cross each other. In this case as well, when a straight line is drawn along the direction D1, the number of the linear projection 41 to be passed differs depending on the position of the straight line SL. For example, the straight line SL1 passes through three or four projections 41, and the straight line SL2 passes through three projections 41, and the straight line SL3 passes through two projections 41.

In the following, each of the elements of the lithium secondary battery is described further in detail.

### [Negative electrode]

The negative electrode includes a negative electrode current collector. In lithium secondary batteries, lithium metal deposits on a surface of the negative electrode by charging. More specifically, lithium ions included in the nonaqueous electrolyte receive electrons on the negative electrode by charging to be a lithium metal, and deposit on the negative electrode surface. The lithium metal deposited on the negative electrode surface dissolves in the nonaqueous electrolyte by discharging as lithium ions. The lithium ion included in the nonaqueous electrolyte may be derived from a lithium salt added to the nonaqueous electrolyte, or may be supplied from the positive electrode active material by charging, or may be both.

The negative electrode may include a negative electrode current collector and a sheet of lithium metal or lithium alloy attached to the negative electrode current collector surfaces. That is, the negative electrode current collector may be provided with a base layer (lithium metal or lithium alloy layer (hereinafter, also referred to as "lithium base layer")) including lithium metal in advance. The lithium alloy may include, other than lithium, elements such as aluminum, magnesium, indium, zinc, and the like. By providing the lithium metal base layer, and depositing the lithium metal thereon during charging, dendritic deposition can be further effectively suppressed. The thickness of the lithium metal base layer is not particularly limited, and may be, for example, in a range of 5 µm to 25 µm.

The negative electrode may include a lithium ion storage layer (i.e., a layer that develops a capacity by storing and releasing lithium ions into and from a negative electrode active material (e.g., graphite)) which is supported on the negative electrode current collector. In this case, the open circuit potential of the negative electrode at full charge may be 70 mV or less versus lithium metal (lithium dissolution-deposition potential). When the open circuit potential of the negative electrode at full charge is 70 mV or less versus lithium metal, the lithium ion storage layer at full charge has lithium metal on its surface. That is, the negative electrode develops a capacity through deposition and dissolution of lithium metal.

The lithium ion storage layer is a negative electrode mixture containing a negative electrode active material, formed in a layer form. The negative electrode mixture may contain, in addition to the negative electrode active material, a binder, a thickener, a conductive material, and other components.

Examples of the negative electrode active material include a carbonaceous material, a Si-containing material, and a Sn-containing material. The negative electrode may include one kind of negative electrode active material, or two or more kinds can be used in combination. Examples of the carbon material include graphite, graphitizable carbon (soft carbon), and non-graphitizable carbon (hard carbon).

The conductive material is, for example, a carbon material. For the carbon material, carbon black, acetylene black, Ketjen Black, carbon nanotube, graphite, and the like may be used.

Examples of the binder include a fluorine resin, polyacrylonitrile, a polyimide resin, an acrylic resin, a polyolefin resin, and a rubber polymer. For the fluorine resin, polytetrafluoroethylene, polyvinylidene fluoride, and the like are used.

The negative electrode current collector may be a conductive sheet. For the conductive sheet, a metal foil, a metal film, and the like are used. The material of the negative electrode current collector may be a metal material other than lithium metal and lithium alloys, and for example, may be Cu, Ni, Fe, or an alloy including a metal element of these. For the alloy, a Cu alloy, a Fe alloy (stainless steel (SUS)), and the like are cited. In particular, for the negative electrode current collector, a copper foil or a copper alloy foil is preferably used, but not particularly limited thereto.

The thickness of the negative electrode current collector is not particularly limited, but may be, for example, 5 µm or more and 300 µm or less, or 10 µm or more and 100 µm or less.

### [Positive electrode]

The positive electrode includes, for example, a positive electrode current collector, and a positive electrode active material layer supported on the positive electrode current collector. The positive electrode active material layer includes, for example, a positive electrode active material, a conductive material, and a binder. The positive electrode active material layer may be formed on only one surface of the positive electrode current collector, or on both surfaces thereof. The positive electrode is produced by, for example, applying a positive electrode mixture slurry containing a positive electrode active material, a conductive material, and a binder onto both surfaces of the positive electrode current collector, drying the applied coating, and then rolling. For the positive electrode active material, the binder, and the conductive material, for example, known materials may be used.

The positive electrode active material is a material that stores and releases lithium ions. Examples of the positive electrode active material include lithium-containing transition metal oxide, transition metal fluoride, polyanion, fluorinated polyanion, and transition metal sulfide. In particular, the lithium-containing transition metal oxide is preferable in view of low production costs and high average discharge voltage.

The lithium-containing transition metal oxide is a composite oxide including lithium and a metal Me other than lithium, and the metal Me includes at least a transition metal. Preferably, of the lithium-containing transition metal oxides, in particular, a composite oxide having a rock salt type crystal structure having a layered structure (layered rock salt type) is used in terms of achieving a high capacity.

The metal Me may include, as a transition metal element, Sc, Ti, V, Cr, Mn, Fe, Co, Ni, Cu, Y, Zr, W, and the like. The lithium-containing transition metal oxide may include a kind of the transition metal element, or two or more kinds thereof. The metal Me preferably includes at least one selected from the group consisting of Co, Ni, and Mn as the transition metal element, and preferably include at least Ni as the transition metal.

The lithium-containing transition metal oxide may include, as necessary, one or more main group elements. For the main group element, Mg, Al, Ca, Zn, Ga, Ge, Sn, Sb, Pb, and Bi may be used. The main group element may be Al and the like. That is, the metal Me may include Al as an optional component.

The lithium-containing transition metal oxide is represented by, for example, a general formula (1): LiₐNi_{b}M_{1-b}O₂. In the general formula (1), 0.9 ≤ a ≤ 1.2 and 0.65 ≤ b ≤ 1 are satisfied, and M is at least one element selected from the group consisting of Co, Mn, Al, Ti, Fe, Nb, B, Mg, Ca, Sr, Zr, and W.

The molar ratio of a total amount of Li included in the positive electrode and the negative electrode mLi relative to the amount of metal Me included in the lithium-containing transition metal oxide mMe: mLi/mMe is, for example, 1.2 or less, or may be 1.1 or less.

The positive electrode current collector may be a conductive sheet. For the conductive sheet, a metal foil, a metal film, and the like are used. The material of the positive electrode current collector may be, for example, Al, an Al alloy, Ti, a Ti alloy, and a Fe alloy (stainless steel (SUS), etc.). In particular, for the positive electrode current collector, an aluminum foil or an aluminum alloy foil are preferably used, but not limited thereto.

The thickness of the positive electrode current collector is not particularly limited, but may be, for example, 5 µm or more and 300 µm or less.

### [Separator]

For the separator, a porous sheet having ion permeability and insulating property is used. Examples of the porous sheet include a microporous thin film, woven fabric, and nonwoven fabric. The separator material is not particularly limited, and may be a polymer material. For the polymer material, an olefin resin, a polyamide resin, cellulose, and the like are cited. For the olefin resin, polyethylene, polypropylene, and a copolymer of ethylene and propylene are cited. The separator may include, as necessary, an additive. For the additive, an inorganic filler and the like are used.

The thickness of the separator is not particularly limited, but may be, for example, 5 µm or more and 20 µm or less, or more preferably 10 µm or more and 20 µm or less.

### [Nonaqueous electrolyte]

A nonaqueous electrolyte with a lithium ion conductivity includes, for example, a nonaqueous solvent, and lithium ions and anions dissolved in the nonaqueous solvent. The nonaqueous electrolyte may be a liquid or a gel. The liquid nonaqueous electrolyte is prepared by dissolving a lithium salt in a nonaqueous solvent. By dissolving the lithium salt in the nonaqueous solvent, lithium ions and anions are generated.

As the lithium salt or the anion, a known material used in a nonaqueous electrolyte of lithium secondary batteries can be used. Specifically, BF₄⁻, ClO₄⁻, PF₆⁻, CF₃SO₃⁻, CF₃CO₂⁻, anions of imides, and anions of oxalate complexes are used. For the anions of imides, N(SO₂CF₃)₂⁻, and N(CₘF₂ₘ₊₁SO₂)ₓ(CₙF₂ₙ₊₁SO₂)y⁻(m and n are each independently an integer of 0 or 1 or more, x and y are each independently 0, 1, or 2, and x+ y = 2 is satisfied) are used. The oxalate complex anions may contain boron and/or phosphorus. The nonaqueous electrolyte may contain one kind of these anions, and may contain two or more kinds thereof.

In view of suppressing dendritic deposition of lithium metal, the nonaqueous electrolyte preferably includes at least an oxalate complex anion, and in particular, an oxalate complex anion having fluorine is preferable. Interaction between the oxalate complex anion having fluorine and lithium allows the lithium metal to deposit as fine particles homogeneously. Therefore, local deposition of lithium metal can be easily suppressed. The oxalate complex anion having fluorine and other anions may be combined. Other anions may be PF₆⁻ and/or anions of imides. For the oxalate complex anion, bisoxalate borate anion, difluorooxalate borate anion (BF₂(C₂O₄)⁻), PF₄(C₂O₄)⁻, and PF₂(C₂O₄)₂⁻ may be used, and preferably at least difluorooxalate borate anion is used.

Examples of the nonaqueous solvent include esters, ethers, nitriles, amides, and halogen substitutes thereof. The nonaqueous electrolyte may contain one kind of these nonaqueous solvents, and may contain two or more kinds thereof. Examples of the halogen substitutes include fluoride and the like.

Examples of the ester include carbonates and carboxylates. For the cyclic carbonate, ethylene carbonate, propylene carbonate, fluoroethylene carbonate (FEC), and the like may be used. Examples of the chain carbonate include dimethyl carbonate (DMC), ethyl methyl carbonate (EMC), and diethyl carbonate. Examples of the cyclic carboxylate include γ-butyrolactone and γ-valerolactone. Examples of the chain carboxylate include ethyl acetate, methyl propionate, and methyl fluoropropionate.

Ether includes cyclic ether and chain ether. Examples of the cyclic ether include 1,3-dioxolane, 4-methyl-1,3-dioxolane, tetrahydrofuran, and 2-methyltetrahydrofuran. Chain ethers include 1,2-dimethoxyethane, diethyl ether, ethyl vinyl ether, methyl phenyl ether, benzyl ethyl ether, diphenyl ether, dibenzyl ether, 1,2-diethoxyethane, diethyleneglycol dimethyl ether, and the like.

The concentration of the lithium salt in the nonaqueous electrolyte is, for example, 0.5 mol/L or more and 3.5 mol/L or less. The concentration of anion in the nonaqueous electrolyte may be 0.5 mol/L or more and 3.5 mol/L or less. The concentration of the oxalate complex anion in the nonaqueous electrolyte may be 0.05 mol/L or more and 1 mol/L or less.

### [Industrial Applicability]

The lithium secondary battery of the present disclosure can be used for electronic devices such as mobile phones, smartphones, and tablet devices, electric automobiles, hybrid automobiles, plug-in hybrid automobiles, and household storage batteries.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

100, 100A: wound body (electrode group)
   10: positive electrode
      11: positive electrode current collector
      11x: positive electrode current collector exposed portion
      12: positive electrode active material layer
      13: positive electrode current collecting plate
   15: positive electrode tab
   20: negative electrode
      21: negative electrode current collector
      21x: negative electrode current collector exposed portion
      22: negative electrode active material layer
      23: negative electrode current collecting plate
   25: welding member
   30: separator
   40: spacer
      41 projection
200, 200A: battery
210: battery case
220: sealing plate
221: gasket

## Claims

1. A lithium secondary battery comprising:
a positive electrode including a positive electrode current collector of an elongated sheet, and a positive electrode active material layer supported on the positive electrode current collector,
a negative electrode including a negative electrode current collector of an elongated sheet,
a separator interposed between the positive electrode and the negative electrode,
a nonaqueous electrolyte having a lithium ion conductivity,
a negative electrode external terminal electrically connected to the negative electrode current collector, and
a negative electrode connection portion interposed between the negative electrode current collector and the negative electrode external terminal, wherein
in the negative electrode, a lithium metal deposits during charging and the lithium metal dissolves during discharging,
the positive electrode, the negative electrode, and the separator form an electrode group of a cylindrical wound body, and
the negative electrode connection portion includes
(i) an end portion along a longitudinal direction of the negative electrode current collector projecting from one end face of the wound body, or
(ii) a plurality of negative electrode tab-leads electrically connected to the negative electrode current collector and extending from the one end face of the wound body.

2. The lithium secondary battery of claim 1, wherein the negative electrode connection portion includes the plurality of negative electrode tab-leads, and
a total width ln of the plurality of negative electrode tab-leads is 2% or more of a length Ln of a longitudinal direction of the negative electrode.

3. The lithium secondary battery of claim 2, wherein when the negative electrode is zoned into three or more regions having the same length in the longitudinal direction, at least one of the negative electrode tab-leads is connected to each region.

4. The lithium secondary battery of claim 3, wherein a to-be-fractured portion for allowing a fracture to occur in the negative electrode current collector in a prioritized manner is provided at an interface between the regions next to each other.

5. The lithium secondary battery of claim 3 or 4, wherein the negative electrode external terminal includes an outer can accommodating the electrode group, the nonaqueous electrolyte, and the negative electrode connection portion,
the outer can has a tubular side portion, a bottom portion closing one end portion of the side portion, and an opening at the other end portion of the side portion, and
the plurality of negative electrode tab-leads are each connected to an inner face of the bottom portion of the outer can.

6. The lithium secondary battery of any one of claims 1 to 3, further comprising a positive electrode external terminal electrically connected to the positive electrode current collector, and
a positive electrode connection portion interposed between the positive electrode current collector and the positive electrode external terminal, wherein
the positive electrode connection portion includes
(i) an end portion along a longitudinal direction of the positive electrode current collector projecting from the other end face of the wound body, or
(ii) a plurality of positive electrode tab-leads electrically connected to the positive electrode current collector and extending from the other end face of the wound body.

7. The lithium secondary battery of claim 6, wherein the positive electrode connection portion includes the plurality of positive electrode tab-leads, and
a total width lp of the plurality of positive electrode tab-leads is 1% or more of a length Lp of the longitudinal direction of the positive electrode.

8. The lithium secondary battery of claim 6 or 7, wherein the negative electrode connection portion includes the plurality of negative electrode tab-leads,
the positive electrode connection portion includes the plurality of positive electrode tab-leads, and
a total width ln of the plurality of negative electrode tab-leads is larger than a total width lp of the plurality of positive electrode tab-leads.

9. The lithium secondary battery of any one of claims 1 to 8, wherein the electrode group has a space that allows the separator to be apart from and oppose at least one of the positive electrode and the negative electrode.

10. The lithium secondary battery of claim 9, further comprising a spacer interposed between the separator and the at least one of the positive electrode and the negative electrode, and the space is provided by the spacer.

11. The lithium secondary battery of claim 10, wherein the spacer is insulative, and a portion of the spacer is disposed at the connection portion.

12. The lithium secondary battery of any one of claims 1 to 11, wherein the positive electrode includes a composite oxide including lithium and a metal Me other than lithium, and
a molar ratio of a total amount of Li included in the positive electrode and the negative electrode mLi relative to an amount of the metal Me included in the composite oxide mMe: mLi/mMe is 1.1 or less.
